# EUROPÄISCHE PATENTSCHRIFT

(11) **EP 1 181 755 B1**
(45) Veröffentlichungstag und Bekanntmachung des Hinweises auf die Patenterteilung: **26.08.2009**
(21) Anmeldenummer: 01913891.6
(22) Anmeldetag: 16.03.2001
(51) Int. Cl.: H02B 1/04

(54) **VERBINDUNGSEINRICHTUNG**
CONNECTOR
DISPOSITIF DE RACCORDEMENT

(30) Priorität: 17.03.2000 DE 10013102
(43) Veröffentlichungstag der Anmeldung: 27.02.2002
(73) Patentinhaber: AEG Niederspannungstechnik GmbH & Co. KG, 24534 Neumünster (DE)
(72) Erfinder: HILLEBRAND, Dietmar, 31848 Bad Münder (DE)
(74) Vertreter: TBK-Patent
(86) Internationale Anmeldenummer: PCT/EP2001/003037
(87) Internationale Veröffentlichungsnummer: WO 2001/069737

(56) Entgegenhaltungen:
- DE-A- 4 403 585

## Beschreibung

Die vorliegende Erfindung bezieht sich auf eine Verbindungseinrichtung zur Verbindung mehrerer Einzelkomponenten, insbesondere zur Verbindung von zwei elektrotechnischen Einzelkomponenten oder Elektrogeräten.

Eine solche Verbindungseinrichtung besteht aus einem Verbindungsclip, der zwei Einzelkomponenten miteinander verbindet, aus einer Verbindungsclipaufnahme, die an jeweils einer der zu verbindenden Einzelkomponenten vorgesehen ist und den Verbindungsclip aufnimmt, sowie aus einer Eingriffsaufnahme, die ebenfalls in einer zu verbindenden Einzelkomponente vorgesehen ist, in die der Verbindungsclip eingreift, um die zwei Einzelkomponenten miteinander zu verbinden. Dadurch wird ein System Verbindungsclip/Verbindungsclipaufnahme gebildet, das die Verbindungseinrichtung darstellt.

Bei der Installation elektrotechnischer Komponenten ist es oftmals notwendig, zwei Einzelkomponenten miteinander zu verbinden, da sie entweder gemeinsam wirken oder in einer großen Anzahl nebeneinander in Schaltkästen etc. installiert werden müssen.

Es soll jedoch bereits hier angemerkt werden, dass die Verwendung nicht allein auf die Verbindung elektrotechnischer Bauelemente beschränkt ist. Vielmehr wird hier nur beispielhaft auf diesen Bereich eingegangen, da die derzeitig bevorzugten Ausführungsbeispiele in diesem Bereich angesiedelt sind.

In der Elektrotechnik war es beispielsweise bislang üblich, zwei Einzelkomponenten über Bügelfederklammern oder sogenannte Brillenfedern miteinander zu verbinden. Eine solche Bügel- oder Brillenfeder besteht aus einem Federstahl, der an seinen beiden Enden spiralförmig eingerollt ist. Diese beiden eingerollten Endabschnitte werden dann jeweils in entsprechende Ausnehmungen, die in den zu verbindenden Einzelkomponenten vor-gesehen sind, eingesetzt, wobei die Abmessungen dergestalt sind, dass das Einsetzen nur unter einem gewissen Druck möglich ist, so dass die Bügel- oder Brillenfeder in die Ausnehmungen quasi einschnappt, um eine sichere Verbindung zu gewährleisten.

Die Montage dieser Bügelfederkonstruktion ist jedoch schwierig und verlangt einiges handwerkliches Geschick, was zu einer längeren Montagezeit und somit teureren Herstellkosten führt. Weiterhin werden Fixierteile (z.B. Ringe oder Scheiben) zwischen den zu verbindenden Geräten benötigt, die zusätzliche Kosten verursachen. Außerdem kann die Bügelfeder leicht verloren gehen, da sie ein kleines, separates Bauteil ist, das bis zur Montage lose mitgeführt wird.

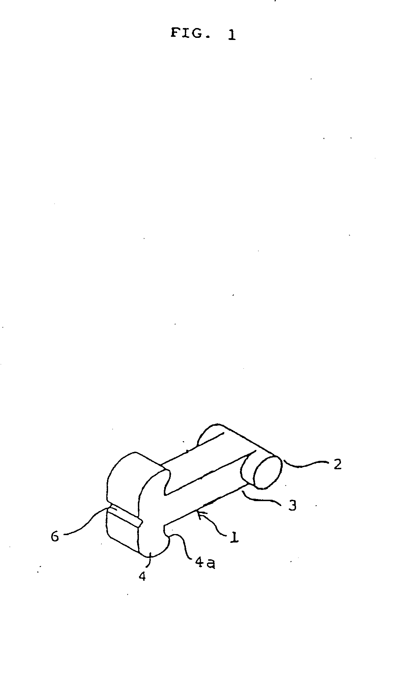

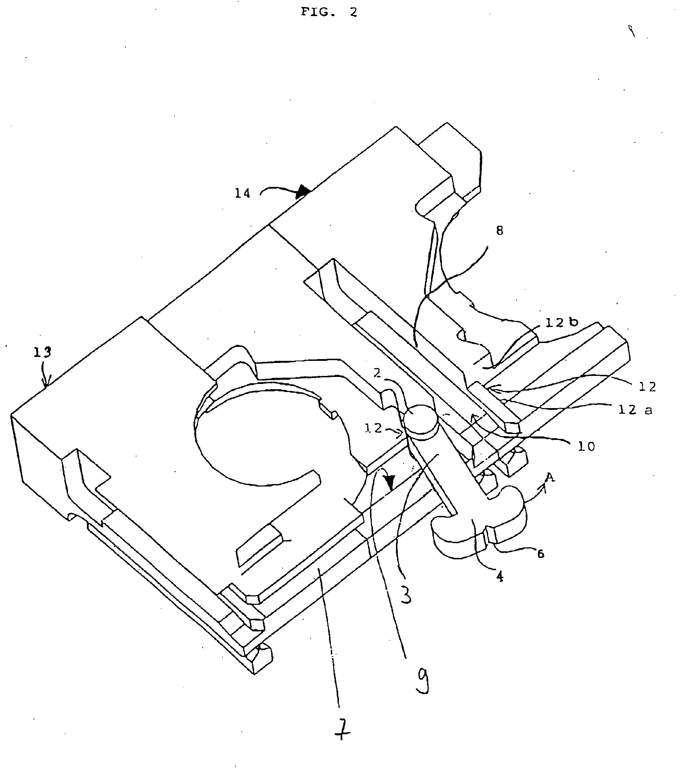

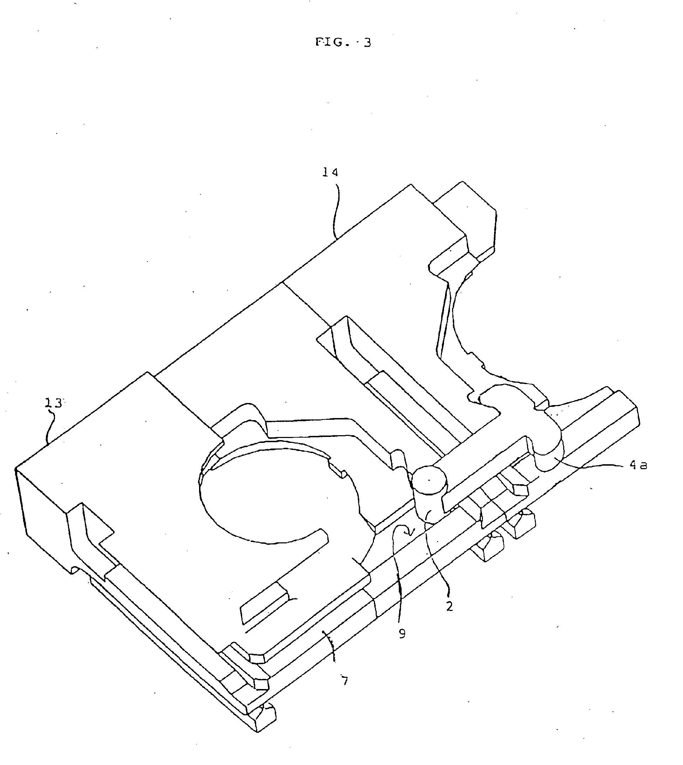

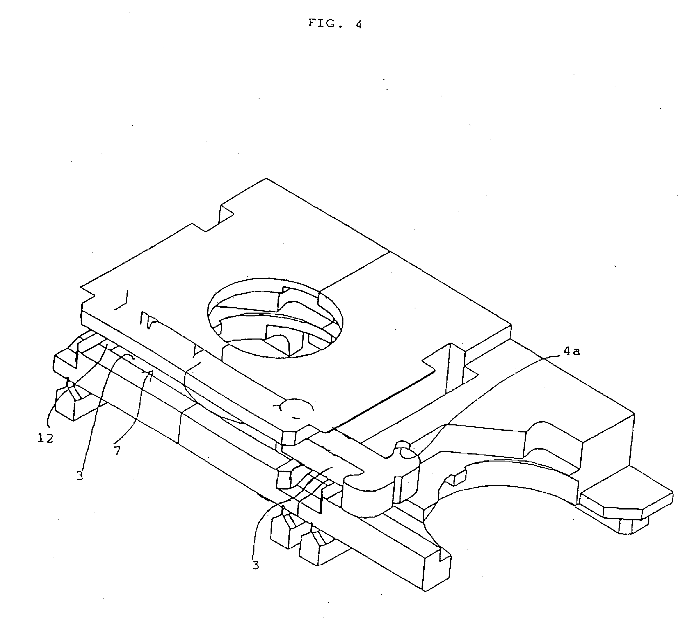

Zur Beseitigung dieser Nachteile, wurde bereits eine Verbindungseinrichtung zweier Bauteile gemäß den Figuren 1 bis 4 von der Anmelderin entwickelt, die inzwischen den Stand der Technik bildet (Siehe DE-A1-19846577). Diese Verbindungseinrichtung dient insbesondere zur Verbindung von elektrotechnischen Einzelkomponenten 13, 14 wie Leitungsschutzschalter, Fehlerstromschutzschalter oder ähnliches und besteht aus einem Verbindungsclip 1, einer Verbindungsclipaufnahme sowie einer Eingriffsaufnahme. Wie aus den Fig. 1 bis 4 hervorgeht, ist der Verbindungsclip ein separates Bauteil, das drehbar in einem zu verbindenden Bauteil 13 gelagert ist. Der Verbindungsclip ist ankerförmig ausgebildet und besteht aus einem Stab 3 und einem Ankerbalken 4. Der Stab 3 hat an dem dem Ankerbalken 4 gegenüberliegenden Ende einen Drehfuß 2, der in einer Drehfußaufnahmelagerung 12 in dem zu verbindenden Bauteil 13 drehbar gelagert ist. Der Ankerbalken hat an beiden Seiten Einschnappabschnitte 4a. Die Eingriffsaufnahme für die Aufnahme der Einschnappabschnitte 4a in dem zu verbindenden Bauteil 14 besteht aus einer Ausnehmung, die eine Hinterschneidung aufweist, in die ein bauchiger Einschnappabschnitt 4a des Ankerbalkens 4 einschnappbar ist. Durch Verdrehen des Verbindungsclips 1 in Pfeilrichtung A wird der Einschnappabschnitt 4a mit der Hinterschneidung 11 in Eingriff gebracht, so dass die beiden zu verbindenden Bauteile lösbar miteinander verbunden werden.

### KURZE ZUSAMMENFASSUNG DER ERFINDUNG

Es bestand das Problem, dass sich der Verbindungsclip, der zwei Bauteile miteinander verband, durch äußere Einflüsse wie das Einwirken von Torsionskräften etc. aus seiner verriegelten Position lösen konnte.

Erfindungsgemäß wird eine Verbindungseinrichtung gemäß Anspruch 1 vorgeschlagen.

Weitere vorteilhafte Ausgestaltungen der Erfindung sind Gegenstand der Unteransprüche.

Durch das Vorsehen einer Verbindungsclipsicherung kann zuverlässig verhindert werden, dass sich der Verbindungsclip durch ungünstige äußere Einflüsse löst. Dies geschieht einfach, indem die Verbindungsclipsicherung in einer Nut geführt wird und so ausgebildet ist, dass ein Endabschnitt der Verbindungsclipsicherung in Anlage mit dem Verbindungsclip gelangt, wenn sich dieser in der Verriegelungsposition befindet. Dadurch kann der Verbindungsclip nicht mehr bewegt werden und ist in seiner verriegelten Position fixiert. Ein unbeabsichtigtes Lösen ist nicht mehr möglich. Die Sicherung des Verbindungsclips wird außerdem dadurch erreicht, dass der in der Nut geführte Abschnitt der Verbindungsclipsicherung in Anlage mit dem Stab des Verbindungsclips gebracht wird. Der Endabschnitt der Verbindungsclipsicherung ist dabei so gestaltet, dass er sich parallel zum Stab des Verbindungsclips erstreckt und diesen an einer Drehung/Lösung hindert.

Ein in der Verbindungsclipsicherung vorgeformter Betätigungseingriff ermöglicht deren Verschieben in der Nut. Dadurch kann die Verbindungsclipsicherung auf einfache Art und Weise in der Nut hin- und hergeschoben werden, sei es zum Freigeben des Verbindungsclips oder zum Verriegeln.

Der Betätigungseingriff kann vorteilhafterweise so vorgeformt sein, dass man mittels eines Hilfswerkzeuges wie beispielsweise eines Schraubendrehers in den Betätigungseingriff eingreifen kann, wodurch sich die Verbindungsclipsicherung leicht hin- und herschieben lässt.

Außerdem kann der Verbindungsclip mit einer Kerbe ausgestattet werden, damit er ebenfalls mit einem einfachen Hilfswerkzeug wieder gelöst werden kann, wenn die Verbindungsclipsicherung vorher in der Nut verschoben wurde, um den Verbindungsclip freizugeben.

Im folgenden soll die Erfindung anhand bevorzugter Ausführungsbeispiele unter Bezugnahme auf die beigefügten Zeichnungen näher erläutert werden.

### KURZE BESCHREIBUNG DER FIGUREN

Fig. 1 zeigt eine perspektivische Ansicht eines herkömmlichen Verbindungsclips.
Fig. 2 ist eine perspektivische Ansicht zweier zu verbindender Einzelkomponenten sowie des herkömmlichen Verbindungsclips, wobei beide Einzelkomponenten teilweise ausgebrochen dargestellt sind und eine der Einzelkomponenten darüber hinaus nur teilweise dargestellt ist.
Fig. 3 zeigt dieselbe Ansicht wie Fig. 2, wobei sich jedoch der herkömmliche Verbindungsclip in seinem eingeschnappten Zustand befindet.
Fig. 4 zeigt eine andere perspektivische Darstellung von Fig. 3.
Fig. 5 zeigt eine perspektivische Einzeldarstellung eines Verbindungsclips einer erfindungsgemäßen Verbindungseinrichtung.
Fig. 6 zeigt eine Einzeldarstellung einer Verbindungsclipsicherung einer erfindungsgemäßen Verbindungseinrichtung.
Fig. 7 ist eine perspektivische, teilweise ausgebrochene Darstellung der Verbindungseinrichtung.
Fig. 8 ist eine Teildarstellung einer Draufsicht, geschnitten entlang der Linie A-A aus Fig. 7.

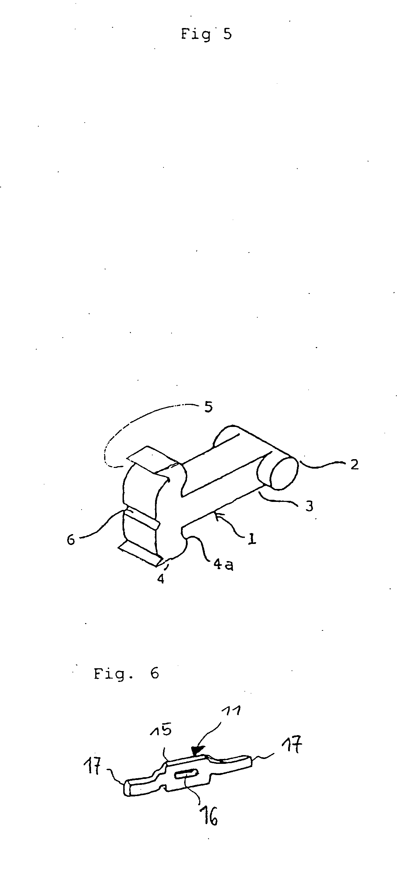

Unter Bezugnahme auf Fig. 5 soll nun der Verbindungsclip näher erläutert werden.

### DETAILLIERTE BESCHREIBUNG DER ERFINDUNG

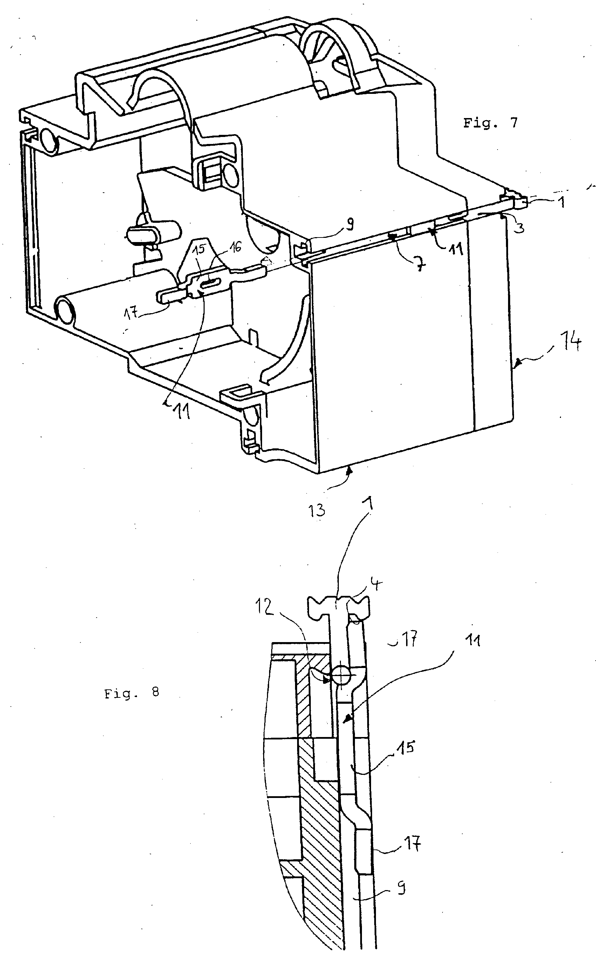

Gemäß Fig. 5 hat der Verbindungsclip 1 einen im wesentlichen ankerförmigen Aufbau. Er besteht aus einem Stab 3 sowie einem Ankerbalken 4, der sich quer über ein Ende des Stabs erstreckt. Sowohl der Stab 3 als auch der Ankerbalken 4 sind flach ausgebildet und haben einen rechteckigen Querschnitt. Am anderen Ende des Stabs, gegenüber dem Ankerbalken 4, befindet sich ein Drehfuß 2, der als runder Wellenabschnitt ausgeformt ist, der links und rechts vom Stab 3 seitlich vorsteht. Er wird in einer Hinterschneidung 9 einer Nut 7, die in einem zu verbindenden Bauteil 13 vorgesehen ist, wie beispielsweise in Fig. 7 zu sehen ist, eingeschoben. Dadurch, dass der Drehfuß 2, der sich in der Hinterschneidung 9 befindet, nicht durch die Nut 7 hindurch passt, wird der Verbindungsclip gegen Herausfallen aus dem zu verbindenden Bauteil 13 gesichert. Die Drehachse des Drehfußes steht senkrecht auf der Längsachse des Ankerbalkens 4. Außerdem ist die Drehachse des Drehfußes 2 um 90° quer zur Längserstreckung des Ankerbalkens 4 ausgerichtet. Der Ankerbalken 4 hat einen leicht gekrümmten, bauchigen Einschnappabschnitt 4a, der sich zum Stab 3 hin krümmt. Dieser Einschnappabschnitt 4a dient als Einschnappelement bei der Montage. Oben in der Mitte des Ankerbalkens, auf der dem Stab abgewandten Seite, ist eine Kerbe 6 vorgesehen. Zudem hat der Ankerbalken 4 an beiden Endabschnitten je eine weitere Einkerbung 5. Die jeweils seitlichen Endflächen der Ankerbalken 4 verlaufen gerade, parallel zu der Längserstreckung des Stabs 3.

In Fig. 6 ist eine Verbindungsclipsicherung 11 abgebildet. Sie besteht aus einem in die Hinterschneidung 9 eingreifenden Gleitabschnitt 15, der im wesentlichen rechteckig ausgebildet ist. Davon erstrecken sich in Längsrichtüng zwei Armabschnitte 17. Sie sind parallel nach vorne versetzt zu dem Gleitabschnitt 15 ausgebildet, indem sie gleich am Ansatz zu dem Gleitabschnitt 15 so gebogen sind, dass sie sich parallel, aber auf einer anderen Ebene erstrecken. Ferner sind die Armabschnitte so schmal gewählt, dass sie durch die Nut 7 passen, während der Gleitabschnitt 15 so breit ist, dass er in die Hinterschneidung 9, nicht jedoch in die Nut 7 passt. D.h. die Verbindungsclipsicherung 11 kann aufgrund des breiteren Gleitabschnitts 15 nicht aus der Nut 7 herausfallen.

Ferner ist die Verbindungsclipsicherung 11 mit einem Betätigungseingriff 16 versehen. Dieser befindet sich zentral in dem Gleitabschnitt 15. Er ist als Ausnehmung ausgebildet, die so gewählt ist, dass beispielsweise ein kleinerer Schraubendreher problemlos in die Ausnehmung eingreifen kann. Dadurch kann die Verbindungsclipsicherung 11 auf einfache Art und Weise in der Nut 7 hin- und hergeschoben werden. Die Armabschnitte 17 sind so geformt, dass sie bündig in der Nut 7 geführt werden, d.h. dass sie nicht darüber hinaus ragen.

Wie in Fig. 7 zu sehen ist, sind mit 13 und 14 zwei zu verbindende Bauteile bezeichnet, wobei beispielsweise das Bauteil 13 ein Hauptgerät ist, und das Bauteil 14 ein Hilfsgerät ist, das an das Hauptgerät montiert werden muss.

In jedem der beiden zu verbindenden Bauteile 13 und 14 sind jeweils eine Verbindungsclipaufnahme sowie zwei jeweils links und rechts in der Verbindungsclipaufnahme vorgesehene Ausnehmungen vorgesehen (nicht gezeigt).

Im folgenden wird die Verbindungsclipaufnahme beschrieben.

Wie aus Fig. 7 hervorgeht, ist an der Vorderseite des Bauteils 13 und 14 die Nut 7 vorgesehen, die sich über die gesamte Seitenlänge hin erstreckt. Die Nut 7 ist an einem Seitenende offen. In der Nut ist eine Hinterschneidung 9 vorgesehen, so das die Nut 7 zusammen mit der Hinterschneidung 9 eine Art Führungsnut bildet, in der der Drehfuß 2 des Verbindungsclips 1 aufgenommen ist und nach links und rechts gleitend verschieblich gelagert ist. Dabei befindet sich der Drehfuß 2 in der Hinterschneidung.9, während der Stab 3 in der Nut 7 geführt wird. Der Ankerbalken 4 befindet sich außerhalb der Nut 7. Dadurch, dass der Drehfuß 2 in der Hinterschneidung 9 geführt wird, kann der Verbindungsclip unmöglich aus der Nut herausfallen, so dass er nicht mehr verlorengehen kann.

Eine in den Bauteilen 13 und 14 vorgesehene und nicht gezeigte Eingriffsausnehmung dient dazu, den Einschnappabschnitt 4a des Verbindungsclips 1 aufzunehmen und festzuhalten. Dazu ist im Inneren, jeweils links und rechts auf der Seite der Nut 7 der Bauteile 13, 14 eine Ausnehmung ausgebildet. Diese Ausnehmung ist im wesentlichen korrespondierend zur Gestalt des Einschnappabschnitts 4a des Ankerbalkens ausgebildet. D.h. sie besteht aus einer Anlagefläche, die sich in etwa senkrecht zur Erstreckung der Nut 7 ins Innere des Bauteils 13, 14 hinein erstreckt. Diese Anlagefläche hat am Ende eine Hinterschneidung, die in etwa der Form des bauchigen Einschnappabschnitts 4a des Verbindungsclips 1 entspricht. Bei der Montage der beiden zu verbindenden Bauteile kann der Einschnappabschnitt 4a in die Ausnehmung einschnappen und in die Hinterschneidung einrasten. Je nach Ausgestaltung der Ausnehmung und Einstellung der Materialflexibilität des Verbindungsclips kann die Einrastfunktion von sehr streng und schwer wieder lösbar bis sehr leicht und leicht lösbar eingestellt werden.

Im folgenden wird die Verbindung der beiden Bauteile 13, 14 mit Hilfe des Verbindungsclips 1 beschrieben.

Die Figuren 7 und 8 zeigen eine Darstellung, in der der Verbindungsclip 1 in einem zu verbindenden Bauteil 13 angeordnet ist, und sich in seiner geschlossenen Position befindet. Das mit dem Bauteil 13 zu verbindende Bauteil 14 befindet sich in einer Anlageposition, in der die beiden Bauteile miteinander verbunden werden sollen. Der Drehfuß 2 des Verbindungsclips 1 ist in einer Drehlagerung 12 des einen zu verbindenden Bauteils 13 angeordnet. Zum leichteren Verständnis ist die obere Abdeckung des zu verbindenden Bauteils 13, in dem sich der Verbindungsclip 1 befindet, in Fig. 8 teilweise ausgebrochen, so dass der Verbindungsclip vollständig zu sehen ist. In Wirklichkeit befindet sich der Stab 3 des Verbindungsclips 1 natürlich zusammen mit seinem Drehfuß 2 im Inneren des zu verbindenden Bauteils 13 und nur ein Teil des Stabs 3 und des Ankerbalkens 4 ragen aus der schlitz-artigen Öffnung der Nut 7 aus dem zu verbindenden Bauteil 13 hervor. Der Verbindungsclip 1 ist um seinen Drehfuß 2 drehbar und befindet sich gem. Fig. 8 in seiner geschlossenen Position.

In Fig. 7 ist die Verbindungsclipsicherung 11 einmal in einer exponierten Alleinstellung (links) zu sehen. Außerdem ist sie ein weiteres Mal dargestellt, wenn sie den Verbindungsclip in seiner geschlossenen Position verriegelt (rechts).

Um die beiden Bauteile 13 und 14 miteinander verbinden zu können, werden sie an den Seiten in Anlage zueinander gebracht. Der Verbindungsclip 1 wird in die rechte Anschlagsposition in Fig. 7, d.h. in die geschlossene Position gebracht. D.h. der Verbindungsclip wird im Gegenuhrzeigersinn gemäß Fig. 8 verschwenkt, bis der Ankerbalken 4 in die nicht dargestellte Aufnahme einschnappt. Anschließend wird die Verbindungsclipsicherung 11 nach rechts in Fig. 7 geschoben bis das Ende des rechten Armabschnitts 17 an den Ankerbalken 4 des Verbindungsclips anstößt. In dieser Position bedeckt der Armabschnitt 17 der Verbindungsclipsicherung 11 die nach außen zeigende Seite des Stabs 3. Nun ist der Verbindungsclip daran gehindert, verschwenkt zu werden. Er ist in der geschlossenen Position fixiert. Erst wenn die Verbindungsclipsicherung 11 mit Hilfe eines Schraubendrehers wieder nach links verschoben wird, gibt sie den Verbindungsclip wieder frei.

Wie in Fig. 8 gezeigt ist, ist die Verbindungsclipsicherung 11 so geformt, dass die Armabschnitte 17 nicht über die Nut 7 hinausragen. Vielmehr schließen sie bündig mit der Nut 7 ab und werden durch sie geführt. In Fig. 7 ist anhand der exponiert dargestellten Verbindungsclipsicherung 11 deutlich erkennbar, dass der Gleitabschnitt 15 so breit ist, dass er nur in die Hinterschneidung 9 passt, während die Armabschnitte 17 so schmal sind, dass sie in die Nut 7 passen.

Wie in Fig. 7 zu erkennen ist, ragt der dem eingeschnappten Einschnappabschnitt 4a gegenüberliegende Einschnappabschnitt 4a des Ankerbalkens 4 des Verbindungsclips 1 in die Nut 7 des Hilfsgeräts 14. Dadurch bleibt der Verbindungsclip auch in seiner geschlossenen Stellung von außen zugänglich, zumindest für ein Hilfswerkzeug, wie beispielsweise einen kleinen Schraubendreher. Dadurch kann die Verbindung der beiden Bauteile wieder gelöst werden. Somit ist das Hilfsgerät leicht an dem Hauptgerät anbringbar und ebenso leicht wieder davon lösbar.

Wie beispielsweise aus Fig. 5 hervorgeht, ist der Verbindungsclip auf dem Ankerbalken 4 in der Mitte, gegenüber dem Stab 3, mit einer V-förmigen Kerbe 6 ausgestattet. Diese Kerbe 6 erlaubt eine leichte Lösung des Verbindungsclips mittels einem Hilfswerkzeug, um die in die Hinterschnitte eingeschnappten Einschnappabschnitte 4a aus der geschlossenen Position in die geöffnete Position zu bewegen. Beispielsweise kann mit einem kleinen Schraubendreher leicht in die Kerbe eingegriffen werden und somit der Verbindungsclip herausgedrückt werden.

Durch die erfindungsgemäße Konstruktion wird eine sichere Verbindung zweier Bauteile ermöglicht, die nicht unbeabsichtigt wieder gelöst werden kann.

## Patentansprüche

1. Verbindungseinrichtung zur Verbindung zweier Bauteile (13, 14), mit einem die beiden Bauteile verbindenden, in eine Verriegelungsstellung verschwenkbaren, Verbindungsclip (1), **gekennzeichnet durch**
eine in einem der zu verbindenden Bauteile verschieblich geführte Verbindungsclipsicherung (11), die wenigstens einen Armabschnitt (17) hat, der **durch** Verschieben in eine den Verbindungsclip (1) fixierende Position bringbar ist, wenn sich der Verbindungsclip in seiner Verriegelungsstellung befindet.

2. Verbindungseinrichtung gemäß Anspruch 1, **dadurch gekennzeichnet, dass** die Verbindungsclipsicherung (11) einen Gleitabschnitt (15) aufweist, der zwei parallele Führungskanten hat.

3. Verbindungseinrichtung gemäß Anspruch 2, **dadurch gekennzeichnet, dass** sich der Armabschnitt (17) der Verbindungsclipsicherung (11) in Verlängerung des Gleitabschnitts (15) erstreckt, wobei der Armabschnitt (17) in einer Ebene angeordnet ist, die parallelversetzt zu der Ebene liegt, in der sich der Gleitabschnitt (15) befindet.

4. Verbindungseinrichtung gemäß einem der vorhergehenden Ansprüche 2 oder 3, **dadurch gekennzeichnet, dass** der Armabschnitt (17) zwei parallele Führungskanten aufweist, die parallel zu den Führungskanten des Gleitabschnitts (15) verlaufen.

5. Verbindungseinrichtung gemäß einem der vorhergehenden Ansprüche, **dadurch gekennzeichnet, dass** die Verbindungsclipsicherung (11) einen Betätigungseingriff (16) aufweist.

6. Verbindungseinrichtung gemäß dem vorhergehenden Anspruch, **dadurch gekennzeichnet, dass** der Betätigungseingriff (16) als Schlitz ausgebildet ist.

7. Verbindungseinrichtung gemäß Anspruch 1, **dadurch gekennzeichnet, dass**
der Verbindungsclip (1) aus einem Stab (3) gebildet wird, an dessen einem Ende ein Ankerbalken (4) vorgesehen ist, der sich quer zum Stab (3) erstreckt, und an dessen anderem Ende ein Drehfuß (2) vorgesehen ist, um in einer Nut (7) mit Hinterschneidung (9) geführt zu werden, die in dem zu verbindenden Bauteil (13, 14) vorgesehen ist.

8. Verbindungseinrichtung gemäß dem vorhergehenden Anspruch, **dadurch gekennzeichnet, dass** der Drehfuß (2) in der Hinterschneidung (9) führbar ist und der Stab (3) aus der Nut (7) heraus ragt.

9. Verbindungseinrichtung gemäß dem vorhergehenden Anspruch, **dadurch gekennzeichnet, dass** die Hinterschneidung (9) der Nut (7) ein auslaufendes Ende aufweist, und ein Ende, das im zu verbindenden Bauteil (13, 14) endet, so dass eine Anlagefläche (12a) gebildet ist, die als Drehlagerung (12) für den Drehfuß (2) des Verbindungsclips (1) dient.

10. Verbindungseinrichtung gemäß einem der vorangehenden Ansprüche 7 bis 9, **dadurch gekennzeichnet, dass** der Ankerbalken (4) einen gekerbten Endabschnitt aufweist.

11. Verbindungseinrichtung gemäß einem der vorhergehenden Ansprüche 7 bis 10, **dadurch gekennzeichnet, dass** die Hinterschneidung (9) der Nut (7) an beiden seitlichen Enden der Nut im zu verbindenden Bauteil (13, 14) endet, so dass an beiden Enden jeweils eine Anlagefläche (12a) gebildet wird, die als Drehlagerung (12) für den Drehfuß (2) des Verbindungsclips (1) dient.

12. Verbindungseinrichtung gemäß einem der vorhergehenden Ansprüche 7 bis 11, **dadurch gekennzeichnet, dass** der Gleitabschnitt (15) am Drehfuß (2) anliegt und sich der Armabschnitt (17) über den Stab (3) erstreckt und an diesem anliegt, wenn sich der Verbindungsclip (1) in seiner Verriegelungsstellung befindet und von der Verbindungsclipsicherung (11) gesichert wird.

## Claims

1. A connecting device that connects two components (13, 14) to a connector clip (1) that connects the two components and can be rotated into an interlocking position,
**characterised by**
a connector clip retention (11) which is displaceably guided in one of the components to be connected and which has at least one arm section (17) which can be brought into a fixed position when the connector clip (1) is in its interlocking position.

2. The connecting device according to Claim 1, **characterised in that** the connector clip retention (11) has a sliding section (15) which has two parallel guiding edges.

3. The connecting device according to Claim 2, **characterised in that** the arm section (17) of the connector clip retention (11) extends in an extension of the sliding section (15), wherein the arm section (17) is arranged in a plane which is displaced parallel with the plane in which the sliding section (15) lies.

4. The connecting device according to any one of the preceding Claims 2 or 3, **characterised in that** the arm section (17) has two parallel guiding edges which run parallel to the guiding edges of the sliding section (15).

5. The connecting device according to any one of the preceding claims **characterised in that** the connector clip retention (11) has an actuating catch (16).

6. The said connecting device according to the preceding claim **characterised in that** the actuating catch (16) is designed as a slot.

7. The said connecting device according to Claim 1, **characterised in that** the connector clip (1) is formed from a shank (3) that has an anchor bar(4) at one end, that extends transversely to the shank (3), and has a rotary base (2) at the other end in order to be slidably disposed in the groove (7) with an undercut recess (9) which is provided in the component (13, 14) to be connected.

8. The said connecting device according to the preceding claim **characterised in that** the rotary base (2) is guidable in the undercut recess (9), and **in that** the shank (3) projects from the groove (7).

9. The said connecting device according to the preceding claim, **characterised in that** the undercut recess (9) of the groove (7) has a projecting end and an end which terminates in the component (13, 14) to be connected, so that a contact face (12a) is formed which serves as a rotary bearing (12) for the rotary base (2) of the connector clip (1).

10. The said connecting device according to any one of the preceding Claims 7 to 9, **characterised in that** said anchor bar(4) has a notched end section.

11. The said connecting device according to one of the preceding Claims 7 to 10, **characterised in that** the undercut recess (9) of the groove (7) terminates at both lateral ends of the groove in the component (13, 14) to be connected, so that a contact face (12a) is formed at both ends, which serves as a rotary bearing (12) for the rotary base (2) of the connector clip (1).

12. The said connecting device according to one of the preceding Claims 7 to 11, **characterised in that** the sliding section (15) lies flush with the rotary base (2) and **in that** the arm section (17) extends over the shank (3) and lies flush with it when the connector clip (11) is in its interlocking position and is secured by the connector clip retention (11).

## Revendications

1. Dispositif de raccordement servant à raccorder deux composants (13, 14) par l'intermédiaire d'un clip de raccordement (1) qui les relie et qui peut basculer pour venir en position de verrouillage, **caractérisé en ce qu'**il comporte, pouvant coulisser dans un des éléments à raccorder, une sécurisation de clip de raccordement (11) présentant une section de bras (17) qui peut, par coulissement, venir occuper une position assurant la fixation du clip de raccordement (1) quand celui-ci occupe sa position de verrouillage.

2. Dispositif de raccordement selon la revendication 1, **caractérisé en ce que** la sécurisation du clip de raccordement (11) présente une section de glissement (15) qui a deux faces de guidage parallèles.

3. Dispositif de raccordement selon la revendication 2, **caractérisé en ce que** la section de bras (17) est dans le prolongement de la section de glissement (15) en étant disposé dans un plan parallèle à celui dans lequel se trouve la section de bras (15) avec décalage par rapport à ce plan.

4. Dispositif de raccordement selon la revendication 2 ou 3, **caractérisé en ce que** la section de bras (17) présente deux faces de guidage qui sont parallèles aux faces de guidage de la section de glissement (15).

5. Dispositif de raccordement selon une des revendications précédentes, **caractérisé en ce que** la sécurisation du clip de raccordement (11) présente une prise d'actionnement (16).

6. Dispositif de raccordement selon une des revendications précédentes, **caractérisé en ce que** la prise d'actionnement (16) est constituée par une fente.

7. Dispositif de raccordement selon la revendication 1, **caractérisé en ce que** le clip de raccordement (1) est constitué par une barre (3) portant à une extrémité une barrette d'ancrage (4) qui lui est transversale et à l'autre extrémité un pied de rotation (2), servant à le guider dans une rainure (7) à contredépouille (9), prévue dans le composant (13, 14) à raccorder.

8. Dispositif de raccordement selon une des revendications précédentes, **caractérisé en ce que** le pied de rotation (2) peut être guidé dans la contredépouille (9) et la barre (3) fait saillie en dehors de la rainure (7).

9. Dispositif de raccordement selon une des revendications précédentes, **caractérisé en ce que** la contredépouille (9) de la rainure (7) présente une extrémité de sortie et une autre extrémité qui se trouve dans le composant (13, 14) à relier, de manière à former une portée d'appui (12a) qui sert de palier (12) au pied de rotation (2) du clip de raccordement.

10. Dispositif de raccordement selon une des revendications 7 à 9, **caractérisé en ce que** la barrette d'ancrage (4) a une section d'extrémité qui est creusé d'une encoche.

11. Dispositif de raccordement selon une des revendications 7 à 10, **caractérisé en ce que** la contredépouille (9) de la rainure (7) se termine aux deux extrémités latérales de celle-ci dans le composant (13, 14) à raccorder, de sorte qu'à chacune de ces extrémités est formée une portée d'appui (12a) qui sert de palier de rotation (12) pour le pied (2) du clip de raccordement (1).

12. Dispositif de raccordement selon une des revendications 7 à 11, **caractérisé en ce que** la section de glissement (15) est appliquée sur le pied de rotation (2) et la section de bras (17) s'étend le long de la barre (3) en étant appliquée sur celle-ci quand le clip de raccordement (1) occupe sa position de verrouillage en étant garanti par sa propre sécurisation (11).
